(19) **Europäisches Patentamt European Patent Office Office européen des brevets**

(11) **EP 3 987 671 B1**

(12) **FASCICULE DE BREVET EUROPEEN**

(45) Date de publication et mention de la délivrance du brevet:
**18.02.2026 Bulletin 2026/08**

(21) Numéro de dépôt: **20731877.5**

(22) Date de dépôt: **15.06.2020**

(51) Classification Internationale des Brevets (IPC):
*H04B 5/00* ^(2024.01)     *G01S 13/75* ^(2006.01)
*H04W 64/00* ^(2009.01)

(52) Classification Coopérative des Brevets (CPC):
**H04B 5/77; G01S 13/75; H04B 5/45; H04W 64/006**

(86) Numéro de dépôt international:
**PCT/EP2020/066471**

(87) Numéro de publication internationale:
**WO 2020/254240 (24.12.2020 Gazette 2020/52)**

(54) **PROCÉDÉ DE DÉTERMINATION D'AU MOINS UN EMPLACEMENT POUR LA RÉTRODIFFUSION D'UN SIGNAL AMBIANT**

VERFAHREN ZUR BESTIMMUNG MINDESTENS EINES ORTES FÜR DIE RÜCKSTREUUNG EINES UMGEBUNGSSIGNALS

METHOD FOR DETERMINING AT LEAST ONE LOCATION FOR THE BACKSCATTERING OF AN AMBIENT SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2019 FR 1906675**

(43) Date de publication de la demande:
**27.04.2022 Bulletin 2022/17**

(73) Titulaire: **Orange**
**92130 Issy-les-Moulineaux (FR)**

(72) Inventeurs:
• **FARA, Romain**
  **92326 CHÂTILLON CEDEX (FR)**
• **PHAN HUY, Dinh Thuy**
  **92326 CHATILLON CEDEX (FR)**

(74) Mandataire: **Cabinet Beau de Loménie**
**103, rue de Grenelle**
**75340 Paris Cedex 07 (FR)**

(56) Documents cités:
**CN-A- 107 861 100**

• **RACHEDI K ET AL: "Demo Abstract: Real-Time Ambient Backscatter Demonstration", IEEE INFOCOM 2019 - IEEE CONFERENCE ON COMPUTER COMMUNICATIONS WORKSHOPS (INFOCOM WKSHPS), IEEE, 29 April 2019 (2019-04-29), pages 987 - 988, XP033619535, DOI: 10.1109/INFCOMW.2019.8845270**
• **VAN HUYNH NGUYEN ET AL: "Ambient Backscatter Communications: A Contemporary Survey", IEEE COMMUNICATIONS SURVEYS & TUTORIALS, vol. 20, no. 4, 31 December 2018 (2018-12-31), pages 2889 - 2922, XP011698260, DOI: 10.1109/COMST.2018.2841964**

## Description

Technique antérieure

La présente invention appartient au domaine général des télécommunications. Elle concerne plus particulièrement un procédé de détermination d'au moins un emplacement pour la rétrodiffusion, par au moins un dispositif transmetteur et vers au moins un dispositif récepteur, d'un signal radio ambiant. Elle concerne également un procédé de rétrodiffusion, par au moins un dispositif transmetteur et vers au moins un dispositif récepteur, d'un signal radio ambiant. L'invention trouve une application particulièrement avantageuse, bien que nullement limitative, pour des applications du type « Internet des objets » (« Internet of Things » ou IoT dans la littérature anglo-saxonne).

La technologie de rétrodiffusion ambiante est aujourd'hui bien connue. Les principes techniques sur lesquels s'appuie cette technologie sont décrits, notamment, dans le document de N. Van Huynh et al. intitulé « Ambient Backscatter Communications: A Contemporary Survey », in IEEE Communications Surveys & Tutorials, vol. 20, no. 4, pp. 2889-2922, Fourthquarter 2018.

Une démonstration en temps réel de la rétrodiffusion ambiante est décrite dans le document de K. Rachedi et al. intitulé « Demo Abstract: Real-Time Ambient Backscatter Demonstration », publié le 29 avril 2019 dans IEEE Conference on Computer Communications Workshops (INFOCOM WKSHPS), Paris, France.

De manière conventionnelle, la rétrodiffusion d'un signal ambiant s'effectue entre au moins un dispositif transmetteur et au moins un dispositif récepteur. En outre, et tel que cela est envisagé jusqu'à présent, lesdits dispositifs occupent chacun une position fixe.

Le signal ambiant concerné correspond à un signal radio émis, de manière permanente ou bien de manière récurrente, par une source dans une bande fréquentielle donnée. Par exemple, il peut s'agir d'un signal de télévision, d'un signal de téléphonie mobile (3G, 4G, 5G), d'un signal Wi-Fi, d'un signal WiMax, etc.

Pour communiquer avec un dispositif récepteur, un dispositif transmetteur exploite le signal ambiant pour envoyer des données vers ledit dispositif récepteur. Plus particulièrement, le dispositif transmetteur réfléchit le signal ambiant vers le dispositif récepteur, éventuellement en le modulant. Le signal ainsi réfléchi est dit « signal rétrodiffusé », et est destiné à être décodé par le dispositif récepteur.

Le fait qu'aucune onde radio supplémentaire (au sens d'une onde autre que celle résultant du signal ambiant) n'est émise par le dispositif transmetteur rend la technologie de rétrodiffusion ambiante particulièrement attractive. En effet, le coût énergétique d'une communication est ainsi optimisé, ce qui est notamment d'importance dans le contexte actuel de l'IoT où chaque objet de la vie courante a vocation à devenir un objet communicant.

Pour mettre en œuvre cette technologie, le dispositif transmetteur est équipé d'au moins une antenne configurée pour recevoir le signal ambiant mais aussi le rétrodiffuser vers le dispositif récepteur.

Le dispositif transmetteur est également associé à des états de fonctionnement, dont au moins un état dit de « rétrodiffusion » (le dispositif transmetteur rétrodiffuse le signal ambiant) ainsi qu'un état contraire dit de « non-rétrodiffusion » (le dispositif transmetteur est transparent au signal ambiant). Ces états correspondent à des configurations dans lesquelles ladite au moins une antenne est connectée à des impédances distinctes.

Le dispositif récepteur, quant à lui, est configuré pour décoder le signal rétrodiffusé. Cela étant, et en pratique, ce décodage ne peut être mis en œuvre que si la variation de puissance électromagnétique reçue par le dispositif récepteur, entre des instants où le dispositif transmetteur est respectivement dans l'état de non-rétrodiffusion et dans un état de rétrodiffusion, dépasse un seuil déterminé, dit « seuil de puissance ».

Pour la suite de la description, une telle variation de puissance électromagnétique reçue par le dispositif récepteur, entre des instants où le dispositif transmetteur est respectivement dans l'état de non-rétrodiffusion et dans un état de rétrodiffusion, est dite « contraste de puissance » $C\_P$.

L'existence d'un tel seuil de puissance, en complément du fait que les dispositifs transmetteur et récepteur occupent des positions fixes, se révèle être toutefois problématique pour garantir une communication efficace entre lesdits dispositifs.

En effet, ces dispositifs sont généralement positionnés dans un environnement de propagation complexe comprenant des éléments (murs, arbres, sol, etc.) susceptibles de générer des réflexions et des diffractions d'ondes émises par la source. Or, ces réflexions et diffractions interfèrent entre elles, de sorte que la distribution de puissance générée par les ondes issues directement de la source (i.e. les ondes qui ne sont pas rétrodiffusées) n'est pas uniforme. Ainsi, cette distribution de puissance présente des zones où la puissance est localement maximale ou bien, à l'inverse, localement minimale.

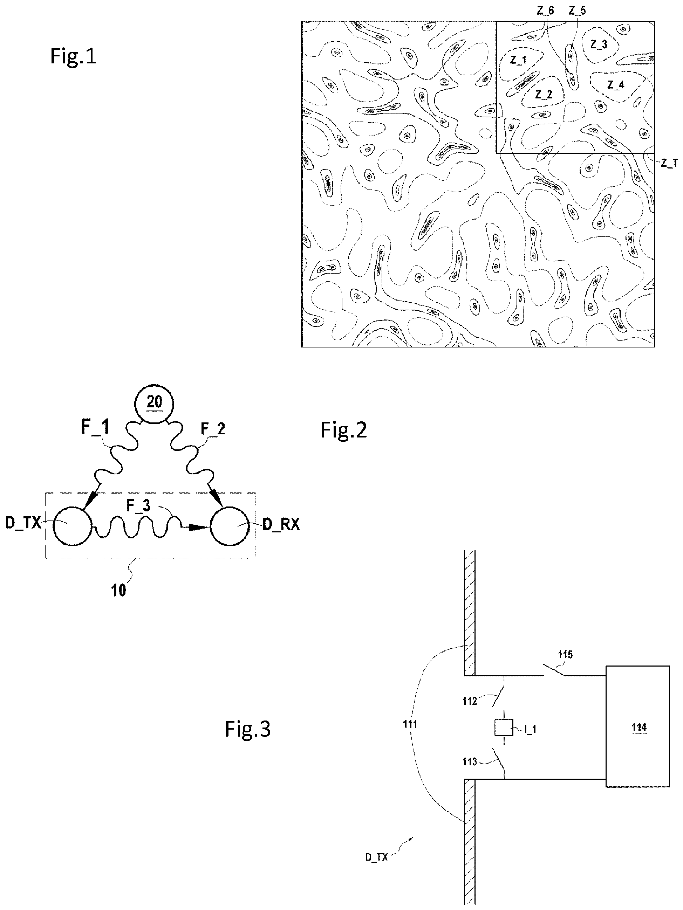

La figure 1 représente schématiquement une carte de distribution de puissance électromagnétique rayonnée par une source. Une telle carte a été générée de manière connue en soi par simulation numérique en considérant un modèle de propagation d'ondes correspondant à une distribution de Rayleigh. Les aspects liés à la modélisation de la propagation d'ondes sont bien connus de l'homme du métier, et ne sont par conséquent par rappelés ici.

Dans l'exemple de la figure 1, ladite source correspond à une tour de télévision émettant dans une bande fréquentielle égale à [583 MHz, 590 MHz]. Ladite carte correspond à un carré de côté égal à 1m25. Les niveaux de puissance rayonnée sont représentés à l'aide de lignes de niveaux, étant entendu que plus une zone de la carte comporte des lignes qui se resserrent, plus cette zone correspond à un minimum local de puissance rayonnée.

Tel qu'illustré par la figure 1, la distribution de puissance présente une pluralité de minima locaux, et donc in fine également une pluralité de maxima locaux. A titre d'exemple, des zones Z_1, Z_2, Z_3 et Z_4, comportant chacune un maximum local de puissance rayonnée (puissance sensiblement égale à 5 dB), sont indiquées. Chaque zone Z_i, pour i variant de 1 à 4, couvre la portion de carte contenue à l'intérieur de la courbe en pointillés entourant le sigle « Z_i ». Deux autres zones Z_5 et Z_6, comportant chacune un minimum local de puissance rayonnée (puissance sensiblement égale à -6 dB), sont également indiquées, à l'aide de flèches. Chaque zone Z_i, pour i variant de 5 à 6, couvre la portion de carte contenue à l'intérieur de la courbe en pointillés pointée par la flèche associée à ladite zone Z_i.

Dès lors, on comprend que si le dispositif transmetteur occupe une position dans une zone où la puissance rayonnée est localement minimale (par exemple la zone Z_5 ou la zone Z_6), ledit contraste de puissance peut ne pas dépasser le seuil. En conséquence, le dispositif récepteur ne peut pas décoder le signal rétrodiffusé, si bien que la communication entre ces dispositifs échoue.

Exposé de l'invention

La présente invention a pour objectif de remédier à tout ou partie des inconvénients de l'art antérieur, notamment ceux exposés ci-avant, en proposant une solution qui permette de déterminer un emplacement d'au moins un dispositif transmetteur, en lequel le contraste de puissance est suffisamment élevé pour garantir que le dispositif récepteur peut décoder un signal rétrodiffusé par ledit au moins un dispositif transmetteur, et ainsi optimiser la communication entre ces dispositifs.

A cet effet, et selon un premier aspect, l'invention concerne un procédé de détermination d'au moins un emplacement pour la rétrodiffusion, par au moins un dispositif transmetteur et vers au moins un dispositif récepteur, d'un signal radio ambiant émis dans une bande fréquentielle, dite « bande d'émission », ledit dispositif transmetteur étant associé à :

- une zone fonction de ladite bande d'émission,
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission.
- En outre, ledit procédé est mis en œuvre par le dispositif transmetteur lorsque celui-ci est dans l'état de non-rétrodiffusion et comporte :
- une étape de parcours du dispositif transmetteur dans au moins une partie de ladite zone,
- au cours du parcours du dispositif transmetteur, une étape d'acquisition, dans la bande de travail et en au moins un emplacement de ladite partie, d'une mesure de puissance électromagnétique reçue par ledit dispositif transmetteur,
- une étape de comparaison de ladite au moins une mesure avec un seuil déterminé, l'emplacement associé à ladite mesure étant déterminé comme étant un emplacement pour la rétrodiffusion si ladite mesure est supérieure audit seuil.

Ainsi, le procédé de détermination selon l'invention permet d'envisager un parcours du dispositif transmetteur au sein d'au moins une partie de ladite zone. Autrement dit, et contrairement aux procédés de l'état de la technique, le dispositif transmetteur n'est pas contraint de rester fixe et peut avantageusement se déplacer dans l'optique de détecter un emplacement en lequel la puissance électromagnétique reçue est suffisamment élevée, pour que le contraste de puissance devienne à son tour suffisamment élevé et ainsi assurer une bonne communication par rétrodiffusion avec le dispositif récepteur.

Le procédé de détermination selon l'invention offre donc la possibilité, dans le cas où un emplacement est déterminé, d'éviter l'échec d'une communication entre le dispositif transmetteur et le dispositif récepteur. L'invention surmonte ainsi avantageusement les désavantages présentés par les solutions de l'état de la technique et qui sont liés à la stationnarité des dispositifs transmetteur et récepteur.

Dans des modes particuliers de mise en œuvre, le procédé de détermination d'au moins un emplacement peut comporter en outre l'une ou plusieurs des caractéristiques suivantes, prises isolément ou selon toutes les combinaisons techniquement possibles.

Dans des modes particuliers de mise en œuvre, le parcours du dispositif transmetteur est réalisé dans toute la zone.

Procéder de cette manière permet de maximiser la probabilité de trouver un maximum local de puissance lors du parcours du dispositif transmetteur. En effet, plus le parcours est réalisé dans une zone étendue, plus la probabilité de trouver un maximum local de puissance est grande.

Dans des modes particuliers de mise en œuvre, le parcours du dispositif transmetteur est réalisé de manière autonome ou de manière assistée.

Dans des modes particuliers de mise en œuvre, une pluralité d'emplacements est considérée lors de l'étape d'acquisition, les mesures étant acquises selon un pas de temps déterminé ou selon un pas de distance déterminé entre chaque emplacement dans ladite partie de la zone.

Dans des modes particuliers de mise en œuvre, une pluralité d'emplacements est considérée lors de l'étape d'acquisition, ledit procédé comportant, lorsque plusieurs emplacements sont déterminés comme étant des emplacements pour la rétrodiffusion, une étape de sélection, parmi lesdits emplacements, d'un emplacement, dit « emplacement optimal », dont la mesure de puissance associée est maximale parmi les mesures de puissance associées auxdits emplacements.

Ledit emplacement optimal désigne donc un emplacement en lequel la puissance reçue depuis la source est maximisée, de sorte que le contraste de puissance sera également maximal lorsque le dispositif transmetteur occupera ledit emplacement optimal pour rétrodiffuser. De cette manière, la communication entre les dispositifs transmetteur et récepteur sera optimisée.

Dans des modes particuliers de mise en œuvre, une pluralité de dispositifs transmetteurs est considérée, les étapes dudit procédé étant mises en œuvre par chacun desdits dispositifs lorsque lesdits dispositifs transmetteurs sont simultanément dans l'état de non-rétrodiffusion.

Selon un deuxième aspect, l'invention concerne un procédé de rétrodiffusion, par au moins un dispositif transmetteur et vers au moins un dispositif récepteur, d'un signal radio ambiant émis dans une bande fréquentielle, dite « bande d'émission », ledit dispositif transmetteur étant associé à :

- une zone fonction de ladite bande d'émission,
- au moins deux états de fonctionnement, un état dit de « rétrodiffusion » et un état contraire dit de « non-rétrodiffusion »,
- une bande fréquentielle, dite « bande de travail », incluse dans ladite bande d'émission.

En outre, ledit procédé comporte :

- une étape de détermination d'au moins un emplacement pour la rétrodiffusion selon un procédé de détermination conforme à l'invention,
- lorsqu'au moins un emplacement a été déterminé et que le dispositif transmetteur est dans l'état de non-rétrodiffusion, une étape de déplacement du dispositif transmetteur dans la zone, de sorte à atteindre une position fixe fonction dudit au moins un emplacement déterminé ,
- une étape de rétrodiffusion, par le dispositif transmetteur, du signal ambiant.

Ainsi, une fois qu'au moins un emplacement a été déterminé, le dispositif transmetteur peut se déplacer vers un tel emplacement en lequel il va occuper une position fixe, par exemple pendant une durée déterminée, pour rétrodiffuser le signal ambiant à destination du dispositif récepteur.

Dans des modes particuliers de mise en œuvre, le procédé de rétrodiffusion peut comporter en outre l'une ou plusieurs des caractéristiques suivantes, prises isolément ou selon toutes les combinaisons techniquement possibles.

Dans des modes particuliers de mise en œuvre, lorsqu'un emplacement optimal est déterminé, ladite position fixe est identique à la position du dispositif transmetteur lorsqu'il a réalisé la mesure de puissance électromagnétique associée audit emplacement optimal.

Dans des modes particuliers de mise en œuvre, les étapes de détermination d'au moins un emplacement, de déplacement du dispositif transmetteur de sorte à atteindre une position fixe, et de rétrodiffusion sont itérées de manière récurrente.

De telles dispositions permettent de prendre en compte la variabilité de l'environnement dans lequel sont positionnés le dispositif transmetteur et le dispositif récepteur.

Typiquement, des éléments susceptibles de réfléchir et / ou diffracter les ondes issues du signal ambiant peuvent voir leurs positions respectives modifiées dans l'environnement proche des dispositifs transmetteur et récepteur. A titre d'exemple purement illustratif, si les dispositifs transmetteur et récepteur sont placés dans une pièce d'appartement et qu'un meuble est déplacé, un emplacement précédemment déterminé comme apte à la rétrodiffusion peut ne plus convenir. Par « ne plus convenir », on fait référence ici au fait que le contraste de puissance peut ne plus dépasser le seuil de décodage, la distribution de puissance ayant été modifiée en raison du déplacement du meuble.

Ainsi, le fait d'envisager une mise en œuvre récurrente du procédé de rétrodiffusion selon l'invention permet avantageusement au dispositif transmetteur de s'adapter à un environnement susceptible d'évoluer.

Selon un troisième aspect, l'invention concerne un programme d'ordinateur comportant des instructions pour la mise en œuvre d'un procédé de détermination d'au moins un emplacement selon l'invention ou d'un procédé de rétrodiffusion selon l'invention lorsque ledit programme est exécuté par un ordinateur.

Selon un quatrième aspect, l'invention concerne un support d'enregistrement lisible par un ordinateur sur lequel est enregistré un programme d'ordinateur selon l'invention.

Selon un cinquième aspect, l'invention concerne un dispositif transmetteur pour la rétrodiffusion vers au moins un dispositif récepteur d'un signal radio ambiant émis dans une bande fréquentielle, dite « bande d'émission », ledit dispositif transmetteur étant associé à :

- une zone fonction de ladite bande fréquentielle,
- des états de fonctionnement, dont au moins un état dit de « rétrodiffusion » ainsi qu'un état contraire dit de « non-rétrodiffusion »,
- une bande fréquentielle, dite « bande de travail », incluse dans ladite bande d'émission.

En outre, ledit dispositif transmetteur comporte :

- des moyens de déplacement dans ladite zone,
- des moyens d'acquisition, configurés pour acquérir, dans la bande de travail et en au moins un emplacement de ladite zone, lorsque le dispositif transmetteur est dans l'état de non-rétrodiffusion, une mesure de puissance électromagnétique reçue par ledit dispositif transmetteur,

- un module de comparaison, configuré pour comparer ladite au moins une mesure avec un seuil déterminé,

- un module de détermination, configuré pour déterminer, lorsque ladite au moins une mesure est supérieure audit seuil, que l'emplacement associé à ladite au moins une mesure est un emplacement pour la rétrodiffusion.

Dans des modes particuliers de réalisation, ledit dispositif transmetteur comporte un module de pilotage, configuré pour commander, lorsqu'au moins un emplacement pour la rétrodiffusion a été déterminé, un déplacement du dispositif transmetteur dans la zone, de sorte à atteindre une position fixe fonction dudit au moins un emplacement déterminé.

Selon un sixième aspect, l'invention concerne un système de communication comportant au moins un dispositif transmetteur selon l'invention et au moins un dispositif récepteur.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement une carte de distribution de puissance électromagnétique rayonnée par une source correspondant à une tour de télévision ;

[Fig. 2] la figure 2 représente schématiquement, dans son environnement et dans un mode particulier de réalisation, un système 10 de communication selon l'invention ;

[Fig. 3] la figure 3 représente schématiquement une vue partielle d'un exemple de réalisation d'un dispositif transmetteur D_TX selon l'invention ;

[Fig. 4] la figure 4 représente, sous forme d'ordinogramme, les principales étapes d'un procédé de détermination d'au moins un emplacement pour la rétrodiffusion selon l'invention ;

[Fig. 5] la figure 5 représente schématiquement un mode préféré de mise en œuvre du procédé de détermination de la figure 4 ;

[Fig. 6] la figure 6 représente, sous forme d'ordinogramme, les principales étapes d'un procédé de rétrodiffusion selon l'invention.

Description des modes de réalisation

La figure 2 représente schématiquement, dans son environnement et dans un mode particulier de réalisation, un système 10 de communication selon l'invention.

Le système 10 de communication comporte un dispositif transmetteur D_TX ainsi qu'un dispositif récepteur D_RX qui reste fixe.

Dans la suite de la description, et tel qu'illustré par le mode de réalisation de la figure 2, on considère de manière non limitative que le système 10 de communication comprend un seul dispositif transmetteur D_TX et un seul dispositif récepteur D_RX. Il convient toutefois de préciser que l'invention est également applicable à un système de communication comprenant une pluralité de dispositifs transmetteurs et / ou une pluralité de dispositifs récepteurs.

Le fonctionnement du système 10 de communication est basé sur la technologie de rétrodiffusion ambiante. Cette technologie consiste, de manière connue en soi, en la rétrodiffusion, par le dispositif transmetteur D_TX et vers le dispositif récepteur D_RX, d'un signal radio ambiant émis dans une bande fréquentielle déterminée, dite « bande d'émission ». Dit autrement, pour communiquer avec le dispositif récepteur D_RX, le dispositif transmetteur D_TX exploite ledit signal ambiant pour envoyer des données vers ledit dispositif récepteur D_RX. Plus particulièrement, le dispositif transmetteur D_TX réfléchit le signal ambiant vers le dispositif récepteur D_RX, éventuellement en le modulant. Le signal ainsi réfléchi est dit « signal rétrodiffusé », et est destiné à être décodé par le dispositif récepteur D_RX.

Les aspects concernant l'émission de données par rétrodiffusion à destination du dispositif récepteur D_RX, ainsi que ceux concernant les techniques de décodage mise en œuvre par ce dernier, sont connus de l'homme du métier et sortent du cadre de la présente invention. Par conséquent, ils ne sont pas détaillés ici plus avant.

Le signal ambiant correspond à un signal radioélectrique émis, de manière permanente ou bien de manière récurrente, par au moins une source 20. Pour la suite de la description, et tel qu'illustré par la figure 2, on considère de manière nullement limitative le cas où le signal ambiant n'est émis que par une seule source. Aucune limitation n'est toutefois attachée au nombre de sources pouvant être considérée dans le cadre de la présente invention, dès lors que ces sources émettent dans des bandes respectives dont l'intersection n'est pas vide et qui en outre intersecte une bande fréquentielle associée au dispositif transmetteur D_TX, comme décrit ci-après plus en détails.

Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

La suite de la description vise plus spécifiquement, mais de manière nullement limitative, un signal ambiant UHF (acronyme de l'expression « Ultra Hautes Fréquences ») émis par une tour de télévision dans la bande d'émission [583 MHz, 590 MHz].

Il convient toutefois de préciser que l'invention reste applicable à tout type de signal radioélectrique, comme par exemple un signal de téléphonie mobile (par exemple 3G, 4G, 5G), un signal Wi-Fi, un signal WiMax, un signal DVB-T, etc.

Par ailleurs, aucune limitation n'est attachée aux formes structurelles pouvant être prises respectivement par la source 20 et le dispositif récepteur D_RX. A titre d'exemples nullement limitatifs, les configurations suivantes sont envisageables (en fonction, bien entendu, de la bande d'émission considérée) :

- la source 20 est une station de base, et le dispositif récepteur D_RX est un smartphone,
- la source 20 est un smartphone, et le dispositif récepteur D_RX est une station de base,
- la source 20 est un smartphone, et le dispositif récepteur D_RX est également un smartphone,
- la source 20 est une passerelle domestique (encore dite « box Internet ») émettant un signal Wi-Fi, et le dispositif récepteur D_RX est un smartphone.

Les ondes véhiculées par les signaux considérés dans la présente invention sont représentées de manière conceptuelle par des flèches ondulées dans la figure 2. Plus particulièrement, les flèches F_1 et F_2 représentent des ondes du signal ambiant émis par la source 20. Les ondes représentées par la flèche F_1 sont rétrodiffusées par le dispositif transmetteur D_TX, et les ondes du signal rétrodiffusé sont ici représentées par la flèche F_3. Les ondes représentées par la flèche F_2 ne sont quant à elles pas rétrodiffusées et parviennent directement au dispositif récepteur D_RX. On note par ailleurs que seules les ondes représentées par la flèche F_3 transportent les données que le dispositif récepteur D_RX est destiné à décoder.

Il convient de noter que la figure 2 est donnée à titre purement illustratif. Ainsi, elle ne comporte par exemple aucun élément susceptible de réfléchir ou diffracter les ondes du signal ambiant. En ce sens, la figure 2 se veut être une version simplifiée de l'environnement dans lequel se trouvent les dispositifs transmetteur D_TX et récepteur D_RX. Il faut néanmoins garder à l'esprit que cet environnement est en général de configuration complexe et comporte, en pratique, des éléments (murs, arbres, sol, etc.) aptes à générer de telles réflexions et diffractions.

Comme mentionné auparavant, le dispositif transmetteur D_TX et le dispositif récepteur D_RX sont respectivement configurés afin de communiquer entre eux par rétrodiffusion ambiante.

La figure 3 représente schématiquement une vue partielle d'un exemple de réalisation du dispositif transmetteur D_TX de la figure 2.

Tel qu'illustré par la figure 3, le dispositif transmetteur D_TX est équipé d'une antenne 111 configurée, de manière connue en soi, pour recevoir le signal ambiant mais aussi le rétrodiffuser vers le dispositif récepteur D_RX. Il convient de noter qu'aucune limitation n'est attachée au nombre d'antennes pouvant équiper le dispositif transmetteur D_TX.

Dans l'exemple de la figure 3, ladite antenne est construite de sorte à présenter une plus grande dimension sensiblement égale à la moitié de la longueur d'onde associée à une fréquence F_C comprise dans la bande d'émission. Plus particulièrement, la fréquence F_C considérée ici est la fréquence centrale de la bande d'émission [583 MHz, 590 MHz], soit 586,5 MHz. Ainsi, ladite plus grande dimension de l'antenne 111 est sensiblement égale à 25 cm.

En pratique, le dispositif transmetteur D_TX est associé à une bande fréquentielle, dite « bande d'influence », qui correspond à la bande fréquentielle dans laquelle l'antenne 111 est apte à recevoir / rétrodiffuser des signaux. Ainsi, dans l'exemple donné ci-avant en référence à la figure 3, ladite bande d'influence correspond à un intervalle de fréquences centré sur ladite fréquence F_C, et dont l'amplitude est égale à une fréquence d'échantillonnage F_E appliquée par un convertisseur analogique / numérique équipant le dispositif transmetteur D_TX (par exemple intégré à des moyens d'acquisition tels que décrits ultérieurement) aux signaux susceptibles d'être reçus. Dit encore autrement, ladite bande d'influence est égale à $[F\_C - F\_E / 2, F\_C + F\_E/2]$.

Par exemple, ladite fréquence d'échantillonnage est égale à 1 MHz, et la bande d'influence est alors égale à [585,5 MHz, 587,5 MHz]. On note alors que la bande d'influence est incluse dans la bande d'émission associée à la source 20. En raison de cette inclusion, ladite bande d'influence est qualifiée de « bande de travail » B_T. Par « bande de travail », on fait référence ici au fait que le dispositif transmetteur D_TX est compatible avec la source 20, à savoir donc que la rétrodiffusion peut être effectuée pour toute fréquence comprise dans ladite bande de travail B_T.

Rien n'exclut cependant de considérer d'autres valeurs pour les fréquences F_C et F_E. Il apparait néanmoins de manière évidente que pour que le dispositif émetteur D_TX soit en mesure de rétrodiffuser le signal ambiant, il convient que ladite bande d'influence soit d'intersection non vide avec ladite bande d'émission, la bande de travail B_T correspondant dès lors à cette intersection. Ainsi, si le dispositif transmetteur D_TX est configuré de sorte à être associé à une bande d'influence contenant la bande d'émission, alors la bande de travail B_T dudit dispositif émetteur D_TX est définie comme étant égale à ladite bande d'émission.

Le dispositif transmetteur D_TX est également associé à des états de fonctionnement, à savoir un état dit de « rétrodiffusion » (le dispositif transmetteur D_TX rétrodiffuse le signal ambiant) ainsi qu'un état contraire dit de « non-rétrodiffusion » (le dispositif transmetteur D_TX est transparent au signal ambiant). Ces états correspondent à des configurations dans lesquelles ladite antenne 111 est connectée à des impédances distinctes. Il s'agit typiquement d'une impédance positive, voire nulle, dans le cas d'un état de rétrodiffusion, et à l'inverse une impédance théoriquement infinie dans le cas de l'état de non-rétrodiffusion.

Par exemple, et tel qu'illustré par la figure 3, le dispositif émetteur comporte deux commutateurs 112, 113 configurés de sorte à pouvoir relier à l'antenne 111, en fonction de leurs positions respectives, une impédance I_1, par exemple égale à 0 Ohms, ou bien encore égale à R Ohms où R est une valeur strictement positive finie. Lorsqu'au moins un des commutateurs 112, 113 n'est pas relié à l'impédance I_1, l'antenne 111 est dans une configuration dite de « circuit ouvert » correspondant audit état de non-rétrodiffusion.

Le dispositif transmetteur D_TX est également associé à une zone Z_T déterminée en fonction de ladite bande d'émission. Une telle zone Z_T correspond à un espace géographique au sein duquel le dispositif transmetteur D_TX peut se déplacer à partir d'un emplacement initial qu'il occupe, pour trouver un emplacement en lequel la distribution de puissance rayonnée par la source 20 est localement maximale.

Ladite zone Z_T est par exemple définie au moment de la conception du dispositif transmetteur D_TX.

Alternativement, ladite zone Z_T est définie alors que le dispositif transmetteur D_TX occupe déjà une position in situ, en fonction d'un type de source dont on souhaite rétrodiffuser le signal ambiant. A cet effet, un message comportant une information de définition de ladite zone Z_T peut être transmis, par exemple par un opérateur, au dispositif transmetteur D_TX.

Préférentiellement, ladite zone Z_T présente au moins une dimension sensiblement égale à la moitié de la longueur d'onde associée à une fréquence comprise dans la bande d'émission, de préférence une fréquence correspondant à la fréquence centrale de ladite bande d'émission. Le fait de considérer une telle valeur pour ladite au moins une dimension résulte du fait que les maxima locaux de la distribution de puissance rayonnée par la source 20 (comme par exemple ceux associés aux zones Z_1, Z_2, Z_3 et Z_4 dans la figure 1) sont en moyenne deux à deux séparés d'une distance égale à la moitié de la longueur d'onde associée à la fréquence centrale de la bande d'émission. On comprend donc ainsi que le fait de considérer une zone Z_T présentant au moins une telle dimension permet avantageusement, au dispositif transmetteur D_TX, de maximiser la probabilité de trouver un maximum local au cours d'un déplacement dans ladite zone Z_T.

A titre d'exemple nullement limitatif, une telle zone Z_T est illustrée sur la figure 1. Dans cet exemple, la fréquence considérée dans la bande d'émission est ladite fréquence F_C, de sorte que ladite au moins une dimension de la zone Z_T est égale à 25 cm. Plus particulièrement, la zone Z_T correspond ici à un carré dont la longueur de côté est égale à 25 cm. En outre, le dispositif transmetteur D_TX occupe un emplacement initial correspondant au centre de ce carré. On note que cet emplacement initial est déterminé indépendamment de toute connaissance a priori de la distribution de puissance rayonnée par la source 20.

Rien n'exclut cependant, suivant d'autres exemples non détaillés ici, de considérer une zone de forme différente d'un carré, ainsi que présentant une ou plusieurs (voire toutes) dimensions inférieures ou supérieures à la moitié de la longueur d'onde associée à une fréquence comprise dans la bande d'émission. En outre, aucune limitation n'est attachée à l'emplacement initial occupé par le dispositif transmetteur D_TX au sein de la zone Z_T. Par exemple, dans le cas où la zone Z_T est un carré, ledit emplacement initial peut correspondre à un coin de ce carré.

Le dispositif transmetteur D_TX comporte en outre des moyens de déplacement (non représentés sur les figures) dans ladite zone Z_T, et plus largement dans tout l'environnement dans lequel se trouvent les dispositifs transmetteur D_TX et récepteur D_RX.

Par exemple, lesdits moyens de déplacement comportent des moyens d'entrainement, comme par exemple au moins un moteur électrique, ainsi que des moyens de guidage, comme par exemple des roues. Rien n'exclut cependant de considérer d'autres moyens d'entrainement, comme par exemple un moteur thermique, ainsi que d'autres moyens de guidage, comme par exemple des chenilles.

Préférentiellement, le dispositif transmetteur D_TX prend la forme d'un robot comportant un moteur électrique et des roues. Par exemple, un tel robot est destiné à évoluer dans un hangar au sein duquel sont stockées des marchandises, ces marchandises étant susceptibles d'être extraites du hangar, une par une, afin d'être expédiées suite à des commandes de consommateurs. Ledit robot est en outre apte à tenir à jour l'inventaire du stock de marchandises dans le hangar. Dès lors, les données rétrodiffusées vers le dispositif récepteur D_RX, qui peut prendre ici la forme d'un smartphone détenu par une personne, peuvent être représentatives dudit inventaire à un instant donné.

Le dispositif transmetteur D_TX comporte également des moyens d'acquisition 114 configurés pour acquérir, dans la bande de travail B_T et en au moins un emplacement de ladite zone Z_T, une mesure de puissance électromagnétique reçue par ledit dispositif transmetteur D_TX.

De manière conventionnelle, lesdits moyens d'acquisition 114 comportent une chaine d'acquisition connectée à un élément sensible configuré pour fournir un signal électrique analogique représentatif de la puissance électromagnétique mesurée. Dans le présent exemple de réalisation, ledit élément sensible correspond à l'antenne 111 équipant le dispositif transmetteur D_TX.

Ladite chaine d'acquisition comporte par exemple une carte d'acquisition configurée pour conditionner ledit signal électrique. Le conditionnement mis en œuvre par la carte d'acquisition comporte par exemple, de manière connue en soi, une amplification et / ou un filtrage et / ou une conversion courant-puissance. D'une manière générale, la configuration de tels moyens d'acquisition 114 est bien connue de l'homme du métier, et n'est donc pas détaillée ici plus avant.

Lesdits moyens d'acquisition sont en outre configurés pour réaliser l'acquisition d'une mesure de puissance lorsque le dispositif transmetteur D_TX est dans l'état de non-rétrodiffusion.

Par exemple, et tel qu'illustré par la figure 3, lesdits moyens d'acquisition 114 sont connectés à l'antenne 111 via un commutateur 115. Ce commutateur 115 est commandé de sorte à connecter lesdits moyens d'acquisition 114 à l'antenne 111 lorsque ladite antenne est dans ladite configuration de circuit ouvert, c'est-à-dire lorsqu'au moins un des commutateurs 112, 113 n'est pas relié à l'impédance I_1.

Le dispositif transmetteur D_TX est également configuré pour effectuer, sur la base d'au moins une mesure de puissance acquise, des traitements visant à déterminer au moins un emplacement pour la rétrodiffusion, en mettant en œuvre tout ou partie des étapes d'un procédé de détermination dudit au moins un emplacement.

A cet effet, le dispositif transmetteur D_TX comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en œuvre au moins une partie des étapes du procédé de détermination.

Alternativement ou en complément, le dispositif transmetteur D_TX comporte également un ou des circuits logiques programmables, de type FPGA, PLD, etc., et / ou circuits intégrés spécialisés (ASIC), et / ou un ensemble de composants électroniques discrets, etc. adaptés à mettre en œuvre tout ou partie des étapes du procédé de détermination.

En d'autres termes, le dispositif transmetteur D_TX comporte un ensemble de moyens configurés de façon logicielle (programme d'ordinateur spécifique) et / ou matérielle (FPGA, PLD, ASIC, etc.) pour mettre en œuvre tout ou partie des étapes du procédé de détermination.

Outre le fait de permettre la détermination d'au moins un emplacement pour la rétrodiffusion, lesdits moyens configurés de façon logicielle et / ou matérielle permettent également de piloter le déplacement du dispositif transmetteur D_TX.

A cet effet, ces moyens comportent par exemple un module de pilotage (non représenté sur les figures) configuré pour générer des commandes de déplacement du dispositif transmetteur D_TX. De telles commandes peuvent être générées indépendamment de l'état (rétrodiffusion ou non-rétrodiffusion) du dispositif transmetteur D_TX.

Par exemple, lesdites commandes sont générées sans assistance. Autrement dit, le dispositif transmetteur D_TX est apte à se déplacer dans la zone Z_T de manière autonome, c'est-à-dire sans intervention d'un opérateur.

Alternativement, le pilotage du dispositif transmetteur D_TX est réalisé de manière assistée par un opérateur qui génèrent à distance des signaux de commande, ces signaux de commande étant ensuite transmis audit dispositif transmetteur D_TX qui se déplace en fonction des données véhiculées dans ces signaux. A cet effet, le dispositif transmetteur D_TX comporte par exemple des moyens de communication pour la réception desdits signaux de commande, lesdits signaux étant ensuite traités par le module de pilotage. Ces moyens de communication s'appuient, de manière connue en soi, sur une interface de communication apte à l'échange de données entre ledit opérateur et ledit dispositif transmetteur D_TX. Aucune limitation n'est attachée à la nature de cette interface de communication, qui peut être filaire ou non filaire, de sorte à permettre l'échange de données selon tout protocole connu de l'homme de l'art (Ethernet, Wifi, Bluetooth, 3G, 4G, 5G, etc.). Rien n'exclut non plus de considérer, selon un autre exemple, que lesdits signaux de commande soient reçus via l'antenne 111 du dispositif transmetteur D_TX.

Pour la suite de la description, on considère de manière nullement limitative que le fonctionnement du dispositif transmetteur D_TX est assuré par une énergie électrique que ce dernier est en mesure de stocker.

Par exemple, ladite énergie électrique est contenue dans une batterie électrique intégrée audit dispositif transmetteur D_TX, et pouvant être par exemple rechargée au moyen de panneaux solaires équipant ledit dispositif transmetteur D_TX, ou bien par effet capacitif, de sorte que le dispositif transmetteur D_TX est énergétiquement autonome. Alternativement, le rechargement de ladite batterie s'effectue via un raccordement au réseau électrique domestique.

Rien n'exclut cependant de considérer d'autres types d'énergie, comme par exemple une énergie fossile, notamment dans le cas où le dispositif transmetteur D_TX est équipé d'un moteur thermique. Enfin, rien n'exclut non plus de considérer un mix énergétique (électrique et thermique).

Autrement dit, et d'une manière générale, aucune limitation n'est attachée à l'énergie considérée pour le fonctionnement du dispositif transmetteur D_TX, ni même à la manière dont cette énergie est obtenue par ce dernier.

Le dispositif récepteur D_RX, quant à lui, est configuré, de manière connue en soi, pour :

- recevoir le signal ambiant émis par la source 20, dont notamment les éventuelles réflexions et diffractions subies par les ondes de ce signal en raison d'éléments placés dans l'environnement dans lequel se trouvent les dispositifs transmetteur D_TX et récepteur D_RX,
- recevoir le signal rétrodiffusé provenant du dispositif transmetteur D_TX.

Typiquement, ledit dispositif récepteur D_RX comporte au moins une antenne de réception. Cet aspect étant bien connu de l'homme du métier, il n'est pas détaillé ici plus avant.

En outre, et comme mentionné ci-avant, le dispositif récepteur D_RX est configuré pour effectuer des traitements visant à décoder le signal rétrodiffusé, en mettant en œuvre un procédé de décodage.

A cet effet, le dispositif récepteur D_RX comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en œuvre ledit procédé de décodage.

Alternativement ou en complément, le dispositif récepteur D_RX comporte également un ou des circuits logiques programmables, de type FPGA, PLD, etc., et / ou circuits intégrés spécialisés (ASIC), et / ou un ensemble de composants électroniques discrets, etc. adaptés à mettre en œuvre ledit procédé de décodage.

En d'autres termes, le dispositif récepteur D_RX comporte un ensemble de moyens configurés de façon logicielle (programme d'ordinateur spécifique) et / ou matérielle (FPGA, PLD, ASIC, etc.) pour mettre en œuvre ledit procédé de décodage.

Les aspects liés aux techniques de décodage utilisées sortent du cadre de la présente invention, et sont en outre connus de l'homme du métier. Par conséquent, ils ne sont pas détaillés ici plus avant.

Il convient toutefois de noter que le décodage ne peut être mis en œuvre que si le contraste de puissance C_P dépasse un seuil déterminé, dit « seuil de puissance » S_P. Un tel seuil de puissance est par exemple défini à partir d'un taux d'erreur de décodage déterminé ainsi que du bruit de réception côté dispositif récepteur D_RX.

En effet, dans le cadre de la rétrodiffusion ambiante, la puissance reçue par le dispositif récepteur D_RX varie selon que le dispositif transmetteur D_TX est dans l'état de rétrodiffusion ou bien de non-rétrodiffusion. Effectivement, lorsque le dispositif transmetteur D_TX rétrodiffuse, la puissance rayonnée directement vers le dispositif récepteur D_RX s'ajoute à celle issue de la rétrodiffusion. Par « directement », on fait référence ici à un rayonnement généré par des ondes du signal ambiant n'ayant pas été rétrodiffusées.

Ainsi, il importe que le dispositif transmetteur D_TX puisse occuper un emplacement en lequel la puissance rayonnée par la source 20 est suffisante, de sorte à faire augmenter le contraste de puissance évalué par le dispositif récepteur D_RX, et pour que le seuil de puissance S_P soit finalement atteint.

En pratique, le contraste de puissance C_P peut être évalué suivant la formule suivante :

$$C\_P = |P\_R - P\_NR|.$$

Dans cette formule, PR (respectivement PNR) correspond à la puissance reçue par le dispositif récepteur D_RX lorsque le dispositif transmetteur D_TX est dans l'état de rétrodiffusion (respectivement dans l'état de non-rétrodiffusion). Ainsi, une condition selon laquelle le décodage peut être mis en œuvre se traduit ici par C_P > S_P. On comprend dès lors que l'atteinte du seuil S_P dépend de l'écart entre P_R et P_NR.

Il convient toutefois de noter que bien que le décodage puisse être théoriquement mis en œuvre dès lors que C_P > S_P, rien n'exclut qu'une condition de décodage plus restrictive soit imposée au dispositif récepteur D_RX, comme par exemple C_P > N*S_P où N est un nombre réel strictement plus grand que 1. Le fait d'imposer une condition plus restrictive permet d'accroitre la qualité de communication entre les dispositifs transmetteur D_TX et récepteur D_RX.

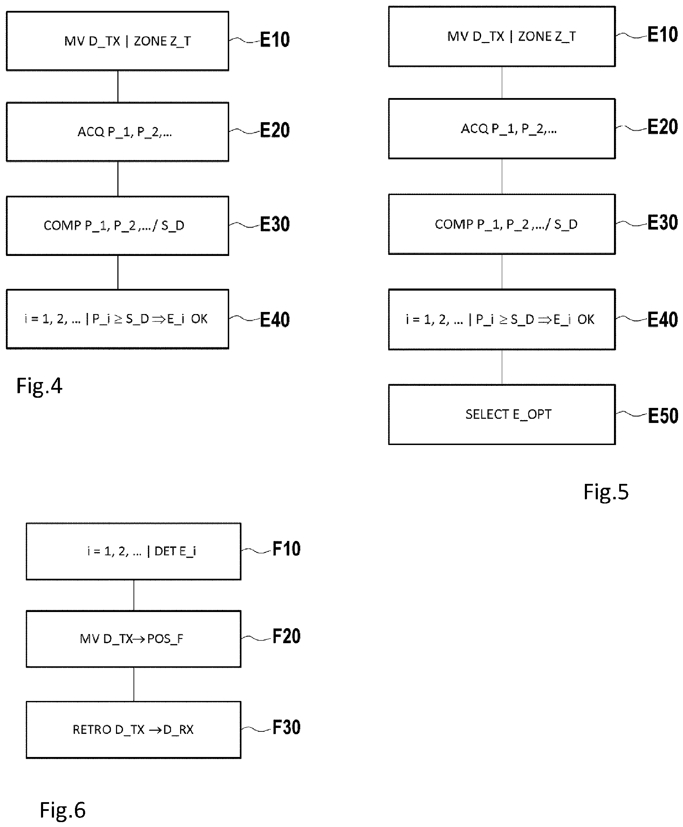

La figure 4 représente, sous forme d'ordinogramme, les principales étapes du procédé de détermination d'au moins un emplacement selon l'invention.

Ledit procédé de détermination est mis en œuvre par le dispositif transmetteur D_TX lorsque celui-ci est dans l'état de non-rétrodiffusion.

Ledit procédé de détermination comporte plusieurs étapes. Dans son principe général, il consiste à réaliser au moins une mesure de puissance électromagnétique lorsque le dispositif transmetteur D_TX réalise un parcours, afin de pouvoir localiser un emplacement en lequel la puissance électromagnétique générée par la source 20 est suffisante pour que le contraste de puissance C_P puisse atteindre le seuil de puissance S_P.

Pour la suite de la description, et à titre purement illustratif, on considère que la distribution de puissance rayonnée par la source 20 au moment où le procédé de détermination est mis en œuvre est conforme à la distribution représentée par la figure 1. On considère également que la zone Z_T associée au dispositif transmetteur D_TX correspond à celle indiquée dans la figure 1.

On considère en outre que le dispositif transmetteur D_TX occupe, avant la mise en œuvre dudit procédé de détermination, un emplacement initial correspondant au centre du carré formant la zone Z_T. Il faut toutefois noter qu'aucune limitation n'est attachée à la localisation dudit emplacement initial au sein, ou bien le long de la frontière, de ladite zone Z_T.

Tel qu'illustré par la figure 4, ledit procédé de détermination comporte une étape E10 de parcours du dispositif transmetteur D_TX dans au moins une partie de la zone Z_T.

Un tel parcours du dispositif transmetteur D_TX permet à ce dernier de balayer au moins en partie la zone Z_T dans l'objectif d'y découvrir au moins un emplacement en lequel la puissance rayonnée par la source 20 est suffisante pour que le dispositif récepteur D_RX puisse décoder le signal qui sera rétrodiffusé.

Par « parcours », on fait référence ici à une phase d'exploration, cette phase pouvant comprendre un déplacement continu (c'est-à-dire sans arrêt au sein de ladite partie) entre des emplacements respectivement initial et final en lesquels le dispositif transmetteur D_TX est fixe, ou bien encore pouvant être réalisé de manière fractionnée (c'est-à-dire avec un ou plusieurs arrêts intermédiaires au sein de ladite partie avant d'atteindre un emplacement final).

Dans un mode particulier de mise en œuvre, le parcours du dispositif transmetteur D_TX est réalisé de manière autonome, c'est-à-dire sans assistance externe. Par exemple, ledit dispositif transmetteur D_TX est configuré pour analyser l'environnement dans lequel il se trouve, afin de détecter d'éventuels obstacles qu'il peut dès lors contourner. Une telle détection est typiquement mise en œuvre grâce à des moyens d'imagerie (par exemple une caméra) équipant le dispositif transmetteur D_TX, ainsi que grâce à des traitements mis en œuvre par ledit dispositif D_TX et visant à analyser des images obtenues avec lesdits moyens d'imagerie. De tels traitements sont bien connus de l'homme du métier, et ne sont donc pas détaillés ici plus avant.

Dans un autre mode particulier de mise en œuvre, le parcours du dispositif transmetteur D_TX est réalisé de manière assistée, par exemple par un opérateur apte à contrôler à distance les mouvements du dispositif transmetteur D_TX.

Quel que soit le mode de mise en œuvre considéré (autonome ou assisté), le parcours du dispositif transmetteur D_TX peut s'effectuer selon une trajectoire déterminée, comme par exemple une spirale, une ligne en créneaux, etc.

Alternativement, le déplacement du dispositif transmetteur D_TX peut s'effectuer de manière non déterministe.

De manière générale, aucune limitation n'est attachée à la trajectoire suivie par le dispositif transmetteur D_TX.

Par ailleurs, ladite partie de la zone Z_T est par exemple configurée de sorte à comprendre l'emplacement initial du dispositif transmetteur D_TX.

A titre illustratif, et en référence à la figure 1, ladite partie correspond à une moitié (par exemple la moitié gauche) du carré formé par la zone Z_T. Ainsi, l'emplacement initial appartient à la frontière de ladite partie.

Alternativement, ladite partie ne comprend pas l'emplacement initial, de sorte que le dispositif transmetteur D_TX réalise un déplacement préalable afin de rejoindre ladite partie qui est ensuite parcourue.

De manière générale, aucune limitation n'est attachée à la forme présentée par ladite partie de la zone Z_T. De plus, le parcours du dispositif transmetteur D_TX peut être réalisé pendant une durée déterminée qui peut être paramétrée, de sorte que la forme de ladite partie peut dépendre de cette durée déterminée.

Dans un mode particulier de mise en œuvre, le déplacement du dispositif transmetteur D_TX est réalisé dans toute la zone Z_T. Procéder de cette manière permet de maximiser la probabilité de trouver un maximum local de puissance lors du parcours du dispositif transmetteur D_TX.

Le procédé de détermination comporte également, au cours du parcours du dispositif transmetteur D_TX, une étape E20 d'acquisition d'au moins une mesure de puissance électromagnétique reçue par ledit dispositif transmetteur D_TX.

Pour la suite de la description, on considère de manière nullement limitative qu'une pluralité de mesures de puissance P_1, P_2,...sont destinées à être acquises dans ladite partie de la zone Z_T.

Comme mentionné auparavant, lesdites mesures P_1, P_2,...sont acquises dans la bande de travail B_T associé au dispositif transmetteur D_TX. Elles sont en outre acquises en des emplacements respectifs E_1, E_2,...de la partie au sein de laquelle le dispositif transmetteur D_TX effectue son parcours.

De telles acquisitions sont préférentiellement réalisées à l'arrêt (phase d'exploration fractionnée). Autrement dit, lors de son parcours, le dispositif transmetteur D_TX marque des arrêts dès lors qu'il souhaite acquérir une mesure de puissance électromagnétique.

Rien n'exclut toutefois de considérer que lesdites mesures P_1, P_2, ... soient acquises alors que le dispositif transmetteur D_TX est en mouvement.

Dans un exemple particulier de mise en œuvre, lesdites mesures P_1, P_2,...sont acquises selon un pas de temps, par exemple paramétrable, déterminé entre chaque emplacement E_1, E_2,.... Pour ce faire, le dispositif transmetteur D_TX se déplace par exemple à vitesse constante.

Selon un autre exemple, ou bien en complément du précédent dans lequel un pas de temps déterminé est considéré, lesdites mesures P_1, P_2, ... sont acquises selon un pas de distance déterminé, par exemple paramétrable, entre chaque emplacement E_1, E_2,....

Le nombre de mesures P_1, P_2,...acquises correspond par exemple à un nombre déterminé. Il convient cependant de noter qu'aucune limitation n'est attachée au nombre de mesures de puissance pouvant être acquises. Ainsi, l'invention reste applicable dans la situation où une seule mesure de puissance est acquise.

En outre, rien n'exclut de considérer une mesure de puissance acquise en l'emplacement initial lorsque le dispositif transmetteur D_TX est à l'arrêt.

Le procédé de détermination comporte également une étape E30 de comparaison desdites mesures de puissance P_1, P_2, ... acquises avec un seuil S_D déterminé.

Cette étape E30 de comparaison est ici mise en œuvre par un module de comparaison équipant le dispositif transmetteur D_TX. Il est à noter que bien que cette étape E30 est ici décrite comme étant mise en œuvre lorsque ledit dispositif transmetteur D_TX est dans l'état de non-rétrodiffusion, rien n'exclut de considérer, suivant un exemple particulier de réalisation, que ledit module de comparaison soit également apte à effectuer une telle comparaison pendant un état de rétrodiffusion.

Le seuil considéré ici pour la comparaison est déterminé en fonction du seuil de puissance S_P associé au dispositif récepteur D_RX et mentionné ci-avant. L'homme du métier sait fixer un seuil S_D à partir duquel un emplacement peut être considéré pour la rétrodiffusion.

Par exemple, afin de compenser le fait que le dispositif récepteur D_RX puisse occuper une position fixe en un emplacement où la distribution de puissance générée par la source 20 (figure 1) est minimale, ledit seuil S_D est choisi suffisamment élevé, par exemple supérieur au seuil de puissance S_P du dispositif récepteur D_RX.

La comparaison effectuée au cours de l'étape E30 est par exemple mise en œuvre à chaque fois qu'une mesure de puissance est acquise.

Alternativement, ladite comparaison est mise en œuvre une fois qu'une durée déterminée de parcours est écoulée et / ou lorsqu'un nombre déterminé de mesures ont été acquises, lesdites mesures étant dans ce cas mémorisées par le dispositif transmetteur D_TX lors de son parcours.

Selon encore une autre alternative, ou bien en complément des alternatives précédentes, ladite comparaison est mise en œuvre une fois que toute la partie de la zone Z_T, voire toute ladite zone Z_T le cas échéant, a été parcourue.

Un emplacement E_1, E_2, ... associé à une mesure P_1, P_2, ... est alors déterminé, au cours d'une étape E40 du procédé de détermination, comme étant un emplacement pour la rétrodiffusion si la mesure associée à cet emplacement est supérieure audit seuil S_D.

Cette étape E40 de détermination est ici mise en œuvre par un module de détermination équipant le dispositif transmetteur D_TX. Il est à noter que bien que cette étape E40 est ici décrite comme étant mise en œuvre lorsque ledit dispositif transmetteur D_TX est dans l'état de non-rétrodiffusion, rien n'exclut de considérer, suivant un exemple particulier de réalisation, que ledit module de détermination soit également apte à effectuer une telle détermination pendant un état de rétrodiffusion.

Il s'agit donc ici d'effectuer un tri parmi les emplacements E_1, E_2,...en lesquels des mesures P_1, P_2, ... ont été acquises.

Selon un exemple de mise en œuvre, lorsque la comparaison des mesures P_1, P_2,...avec le seuil S_D est effectuée à chaque fois qu'une mesure de puissance est acquise, l'étape E40 de détermination est stoppée dès lors qu'une mesure acquise est déterminée supérieure au seuil S_D.

Ainsi, dans cet exemple, si la première mesure P_1 acquise par le dispositif transmetteur D_TX est réalisée en son emplacement initial, et que cette mesure P_1 est supérieure au seuil S_D, ledit dispositif transmetteur D_TX reste immobile.

Procéder de cette manière permet non seulement de déterminer un emplacement de sorte que le signal rétrodiffusé peut être décodé par le dispositif récepteur D_RX, mais également d'optimiser la consommation d'énergie du dispositif transmetteur D_TX.

A titre d'exemple illustratif, et en référence à la figure 1, le dispositif transmetteur D_TX parcourt toute la partie correspondant à la moitié gauche du carré formé par la zone Z_T. En outre, dans cet exemple, la comparaison des mesures acquises est réalisée une fois que toute ladite partie a été parcourue, les mesures ayant été acquises selon un pas de distance égal à 2 cm. A l'issue de son parcours, le dispositif transmetteur D_TX a déterminé deux emplacements pour la rétrodiffusion respectivement localisés à l'intérieur des zones Z_1 et Z_2.

La figure 5 représente schématiquement un mode préféré de mise en œuvre du procédé de détermination de la figure 4.

Dans ce mode préféré de mise en œuvre, une pluralité d'emplacements est considérée lors de l'étape E20 d'acquisition. En outre, et tel qu'illustré par la figure 5, ledit procédé de détermination comporte, lorsque plusieurs emplacements sont déterminés comme étant des emplacements pour la rétrodiffusion, une étape E50 de sélection, parmi lesdits emplacements pour la rétrodiffusion, d'un emplacement, dit « emplacement optimal » E_OPT, dont la mesure de puissance associée est maximale parmi les mesures de puissance associées auxdits emplacements pour la rétrodiffusion.

Ledit emplacement optimal E_OPT désigne donc un emplacement en lequel la puissance reçue depuis la source 20 est maximisée, de sorte que la puissance reçue par le dispositif récepteur D_RX est également maximale lorsque le dispositif transmetteur D_TX occupe ledit emplacement optimal E_OPT pour rétrodiffuser. De cette manière, la communication entre ces dispositifs D_TX, D_RX est optimisée.

En reprenant l'exemple illustratif mentionné ci-dessus, et dans lequel deux emplacements ont été déterminés dans les zones Z_1 et Z_2, l'emplacement optimal E_OPT sélectionné correspond par exemple finalement à l'emplacement associé à la zone Z_1.

L'invention concerne également un procédé de rétrodiffusion du signal ambiant par le dispositif transmetteur D_TX vers le dispositif récepteur D_RX.

La figure 6 représente, sous forme d'ordinogramme, les principales étapes dudit procédé de rétrodiffusion.

Tel qu'illustré par la figure 6, ledit procédé de rétrodiffusion comporte tout d'abord une étape F10 de détermination d'au moins un emplacement pour la rétrodiffusion.

Une telle étape F10 de détermination est réalisée conformément au procédé de détermination décrit auparavant.

Par la suite, et lorsqu'au moins un emplacement a été déterminé et que le dispositif transmetteur D_TX est dans l'état de non-rétrodiffusion, ledit procédé de rétrodiffusion comporte une étape F20 de déplacement du dispositif transmetteur D_TX dans la zone Z_T, de sorte à atteindre une position fixe POS_F fonction dudit au moins un emplacement déterminé.

Par exemple, ladite position fixe POS_F correspond à une position identique à celle occupée par le dispositif transmetteur D_TX lorsqu'il a réalisé la mesure associée audit au moins un emplacement déterminé. Par "position identique", il faut comprendre que, si le dispositif transmetteur D_TX est équipé de plusieurs antennes, les positions relatives (en termes de coordonnées géographiques) desdites antennes, lorsque le dispositif transmetteur D_TX atteint ladite position fixe POS_F, correspondent exactement aux positions relatives des antennes au moment où la mesure associée audit au moins un emplacement a été acquise.

Le choix d'une telle position fixe POS_F ne constitue qu'une variante d'implémentation de l'invention. Par exemple, le dispositif transmetteur D_TX peut occuper une position fixe POS_F selon laquelle la position (en termes de coordonnées géographiques) de son centre de gravité soit identique à la position de son centre de gravité au moment où la mesure associée audit au moins un emplacement a été acquise. Bien qu'il y ait une correspondance concernant la position du centre de gravité, les positions relatives des antennes pour ladite position fixe peuvent néanmoins différer des positions relatives des antennes au moment où la mesure associée audit au moins un emplacement a été acquise.

Il est à noter que si plusieurs emplacements sont déterminés, la position fixe POS_F est par exemple fonction de la position du dispositif transmetteur D_TX lorsqu'il a réalisé la mesure de puissance électromagnétique associée à l'un quelconque desdits emplacements déterminés.

Préférentiellement, lorsqu'un emplacement optimal E_OPT est sélectionné, ladite position fixe POS_F est identique à la position du dispositif transmetteur D_TX lorsqu'il a réalisé la mesure de puissance électromagnétique associée audit emplacement optimal E_OPT.

Une fois que le dispositif transmetteur D_TX a atteint ladite position fixe POS_F, le procédé de rétrodiffusion comporte une étape F30 de rétrodiffusion, par le dispositif transmetteur D_TX, du signal ambiant. Pour ce faire, ledit dispositif D_TX passe de l'état de non-rétrodiffusion à l'état de rétrodiffusion.

Dans un mode particulier de mise en œuvre, les étapes de détermination F10 d'au moins un emplacement, de déplacement F20 du dispositif transmetteur de sorte à atteindre une position fixe POS_F, et de rétrodiffusion F30 sont itérées de manière récurrente.

Le fait de réaliser ces étapes de manière récurrente permet de prendre en compte la variabilité de l'environnement dans lequel sont positionnés le dispositif transmetteur D_TX et le dispositif récepteur D_RX.

Par exemple, lesdites étapes sont itérées de manière périodique, par exemple une fois par jour dans un environnement dans lequel la distribution de puissance est stable, ou bien davantage, par exemple une fois toutes les heures si la distribution de puissance est susceptible d'évoluer substantiellement toutes les heures.

L'invention a été décrite jusqu'à présent en considérant que le dispositif transmetteur D_TX était associé à un seul état de rétrodiffusion ainsi qu'un seul état de non-rétrodiffusion. L'invention reste néanmoins applicable dans le cas où le dispositif transmetteur D_TX est associé à une pluralité d'états de rétrodiffusion, ces états étant distincts entre eux en ce qu'ils sont mis en œuvre grâce à des impédances respectives distinctes entre elles. On comprend bien entendu que l'état de non-rétrodiffusion reste quant à lui unique.

L'homme du métier sait adapter la configuration du dispositif transmetteur D_TX tel que représenté dans la figure 3 pour prendre en considération plusieurs états de rétrodiffusion. Par exemple, en référence à la figure 3, plusieurs impédances distinctes entre elles peuvent être agencées en parallèle entre les commutateurs 112, 113.

Par ailleurs, l'invention a également été décrite jusqu'à présent en considérant un unique dispositif transmetteur D_TX. L'invention reste néanmoins applicable dans le cas où une pluralité de dispositifs transmetteurs D_TX est considérée. Par exemple, lorsqu'une pluralité de dispositif transmetteurs D_TX est considérée, les étapes du procédé de détermination d'au moins un emplacement (étape E10 de parcours, étape E20 d'acquisition, étape E30 de comparaison, étape E40 de détermination, et étape E50 de sélection le cas échéant) sont mises en œuvre par chacun desdits dispositifs D_TX lorsque lesdits dispositifs transmetteurs D_TX sont simultanément dans l'état de non-rétrodiffusion. Pour assurer une telle simultanéité, lesdits dispositifs transmetteurs D_TX sont par exemple synchronisés entre eux par GPS (acronyme de l'expression anglo-saxonne "Global Positioning System") et observent chacun une même durée de non-rétrodiffusion selon une période qui leur est également commune, une telle durée et une telle période étant par exemple définies dans une norme de télécommunication. Préférentiellement, une fois que lesdits dispositifs transmetteurs D_TX se sont déplacés pour atteindre leurs positions fixes respectives (étape F20), ils rétrodiffusent de manière simultanée le signal ambiant (étape F30).

## Revendications

1. Procédé de détermination d'au moins un emplacement pour la rétrodiffusion, par au moins un dispositif transmetteur (D_TX) et vers au moins un dispositif récepteur (D_RX), d'un signal radio ambiant émis dans une bande fréquentielle, dite « bande d'émission », ledit dispositif transmetteur (D_TX) étant associé à :

   - une zone (Z_T) fonction de ladite bande d'émission,
   - des états de fonctionnement, dont au moins un état dit de « rétrodiffusion » ainsi qu'un état contraire dit de « non-rétrodiffusion »,
   - une bande fréquentielle, dite « bande de travail », incluse dans ladite bande d'émission,

   ledit procédé étant mis en œuvre par le dispositif transmetteur (D_TX) lorsque celui-ci est dans l'état de non-rétrodiffusion et comportant :

   - une étape (E10) de parcours du dispositif transmetteur (D_TX) dans au moins une partie de ladite zone (Z_T),
   - au cours du parcours du dispositif transmetteur (D_TX), une étape (E20) d'acquisition, dans la bande de travail et en au moins un emplacement (E_i) de ladite partie, d'au moins une mesure de puissance électromagnétique (P_i) reçue par ledit dispositif transmetteur (D_TX),
   - une étape (E30) de comparaison de ladite au moins une mesure de puissance électromagnétique (P_i) avec

      un seuil (S_D) déterminé, l'emplacement (E_i) associé à ladite mesure de puissance électromagnétique étant déterminé (E40) comme étant un emplacement pour la rétrodiffusion si ladite mesure de puissance électromagnétique (P_i) est supérieure audit seuil (S_D) déterminé.

2. Procédé selon la revendication 1, dans lequel le parcours du dispositif transmetteur (D_TX) est réalisé dans toute la zone (Z_T).

3. Procédé selon l'une quelconque des revendications 1 à 2, dans lequel le parcours du dispositif transmetteur (D_TX) est réalisé de manière autonome ou de manière assistée.

4. Procédé selon l'une quelconque des revendications 1 à 3, dans lequel une pluralité d'emplacements est considérée lors de l'étape (E20) d'acquisition, chaque mesure de puissance électromagnétique étant acquise selon un pas de temps déterminé ou

   selon un pas de distance déterminé entre chaque emplacement d'au moins un emplacement dans ladite partie de la zone (Z_T).

5. Procédé selon l'une quelconque des revendications 1 à 4, dans lequel une pluralité d'emplacements sont considérés lors de l'étape (E20) d'acquisition, ledit procédé comportant, lorsque plusieurs emplacements sont déterminés comme étant des emplacements pour la rétrodiffusion, une étape (E50) de sélection, parmi lesdits emplacements pour la rétrodiffusion, d'un emplacement, dit « emplacement optimal » (E_OPT), dont la mesure de puissance électromagnétique associée est maximale parmi les mesures de puissance électromagnétique associées auxdits emplacements pour la rétrodiffusion.

6. Procédé selon l'une quelconque des revendications 1 à 5, dans lequel une pluralité de dispositifs transmetteurs (D_TX) est considérée, les étapes (E10, E20, E30, E40, E50) dudit procédé étant mises en œuvre par chacun desdits dispositifs lorsque lesdits dispositifs transmetteurs sont simultanément dans l'état de non-rétrodiffusion.

7. Procédé de rétrodiffusion, par au moins un dispositif transmetteur (D_TX) et vers au moins un dispositif récepteur (D_RX), d'un signal radio ambiant émis dans une bande fréquentielle, dite « bande d'émission », ledit dispositif transmetteur (D_TX) étant associé à :

   - une zone (Z_T) fonction de ladite bande d'émission,
   - au moins deux états de fonctionnement, un état dit de « rétrodiffusion » et un état contraire dit de « non-rétrodiffusion »,
   - une bande fréquentielle, dite « bande de travail », incluse dans ladite bande d'émission,

   ledit procédé comportant :

   - une étape (F10) de détermination d'au moins un emplacement pour la rétrodiffusion selon un procédé conforme à l'une quelconque des revendications 1 à 6,
   - lorsqu'au moins un emplacement a été déterminé et que le dispositif transmetteur (D_TX) est dans l'état de non-rétrodiffusion, une étape (F20) de déplacement du dispositif transmetteur (D_TX) dans la zone (Z_T), de sorte à atteindre une position fixe (POS_F) fonction dudit au moins un emplacement déterminé,
- une étape (F30) de rétrodiffusion, par le dispositif transmetteur (D_TX), du signal ambiant.

8. Procédé selon la revendication 7, dans lequel, lorsqu'un emplacement optimal (E_OPT) est déterminé conformément à la revendication 5, ladite position fixe (POS_F) est identique à la position du dispositif transmetteur (D_TX) lorsqu'il a réalisé la mesure de puissance électromagnétique associée audit emplacement optimal (E_OPT).

9. Procédé selon l'une quelconque des revendications 7 à 8, dans lequel les étapes de détermination (F10) d'au moins un emplacement, de déplacement (F20) du dispositif transmetteur de sorte à atteindre une position fixe (POS_F), et de rétrodiffusion (F_30) sont itérées de manière récurrente.

10. Programme d'ordinateur comportant des instructions pour la mise en œuvre d'un procédé de détermination d'au moins un emplacement selon l'une quelconque des revendications 1 à 6 ou d'un procédé de rétrodiffusion selon l'une quelconque des revendications 7 à 9 lorsque ledit programme est exécuté par un ordinateur.

11. Support d'enregistrement lisible par un ordinateur sur lequel est enregistré un programme d'ordinateur selon la revendication 10.

12. Dispositif transmetteur (D_TX) pour la rétrodiffusion vers au moins un dispositif récepteur (D_RX) d'un signal radio ambiant émis dans une bande fréquentielle, dite « bande d'émission », ledit dispositif transmetteur étant associé à :

    - une zone (Z_T) fonction de ladite bande fréquentielle,
    - des états de fonctionnement, dont au moins un état dit de « rétrodiffusion » ainsi qu'un état contraire dit de « non-rétrodiffusion »,
    - une bande fréquentielle, dite « bande de travail », incluse dans ladite bande d'émission,

ledit dispositif transmetteur (D_TX) comportant :

    - des moyens de déplacement dans ladite zone,
    - des moyens d'acquisition (114), configurés pour acquérir, dans la bande de travail et en au moins un emplacement (E_i) de ladite zone (Z_T), lorsque le dispositif transmetteur (D_TX) est dans l'état de non-rétrodiffusion, d'au moins une mesure de puissance électromagnétique (P_i) reçue par ledit dispositif transmetteur (D_TX),
    - un module de comparaison, configuré pour comparer ladite au moins une mesure de puissance électromagnétique avec un seuil (S_D) déterminé,
    - un module de détermination, configuré pour déterminer, lorsque ladite au moins une mesure de puissance électromagnétique est supérieure audit seuil (S_D) déterminé que l'emplacement (E_i) associé à ladite au moins une mesure de puissance électromagnétique est un emplacement pour la rétrodiffusion.

13. Dispositif transmetteur (D_TX) selon la revendication 12, ledit dispositif transmetteur (D_TX) comportant un module de pilotage, configuré pour commander, lorsqu'au moins un emplacement pour la rétrodiffusion a été déterminé, un déplacement du dispositif transmetteur (D_TX) dans la zone (Z_T), de sorte à atteindre une position fixe (POS_F) fonction dudit au moins un emplacement déterminé.

14. Système de communication comportant au moins un dispositif transmetteur (D_TX) selon l'une quelconque des revendications 12 à 13 et au moins un dispositif récepteur (R_TX).

**Patentansprüche**

1. Verfahren zur Bestimmung mindestens eines Ortes für die Rückstreuung, durch mindestens eine Übertragungsvorrichtung (D_TX) und zu mindestens einer Empfangsvorrichtung (D_RX), eines Umgebungsfunksignals, das in einem Frequenzband, "Sendeband" genannt", gesendet wird, wobei die Übertragungsvorrichtung (D_TX) Folgendem zugeordnet ist:

    - einer Zone (Z_T), die von dem Sendeband abhängig ist,
    - Betriebszuständen, darunter mindestens einem sogenannten "Rückstreu"-Zustand sowie einem gegenteiligen sogenannten "Nicht-Rückstreu"-Zustand,
    - einem Frequenzband, "Arbeitsband" genannt, das in dem Sendeband enthalten ist,

wobei das Verfahren von der Übertragungsvorrichtung (D_TX) durchgeführt wird, wenn diese in dem Nicht-Rückstreu-Zustand ist, und umfasst:

    - einen Schritt (E10) des Bewegens der Übertragungsvorrichtung (D_TX) in mindestens einem Teil der Zone (Z_T),
    - während des Bewegens der Übertragungsvorrichtung (D_TX) einen Schritt (E20) des Erfassens, in dem Arbeitsband und an mindestens einem Ort (E_i) des Teils, mindestens einer Messung der elektromagnetischen Leistung (P_i), die von der Übertragungsvorrichtung (D_TX) empfangen wird,
- einen Schritt (E30) des Vergleichens der mindestens einen Messung der elektromagnetischen Leistung (P_i) mit einem bestimmten Schwellenwert (S_D), wobei der Ort (E_i), welcher der Messung der elektromagnetischen Leistung zugeordnet ist, als ein Ort für die Rückstreuung bestimmt wird (E40), wenn die Messung der elektromagnetischen Leistung (P_i) größer als der bestimmte Schwellenwert (S_D) ist.

2. Verfahren nach Anspruch 1, wobei das Bewegen der Übertragungsvorrichtung (D_TX) in der gesamten Zone (Z_T) ausgeführt wird.

3. Verfahren nach einem der Ansprüche 1 bis 2, wobei das Bewegen der Übertragungsvorrichtung (D_TX) autonom oder unterstützt ausgeführt wird.

4. Verfahren nach einem der Ansprüche 1 bis 3, wobei eine Mehrzahl von Orten bei dem Schritt (E20) des Erfassens betrachtet wird, wobei jede Messung der elektromagnetischen Leistung gemäß einem bestimmten Zeitschritt oder gemäß einem bestimmten Distanzschritt zwischen jedem Ort mindestens eines Orts in dem Teil der Zone (Z_T) erfasst wird.

5. Verfahren nach einem der Ansprüche 1 bis 4, wobei eine Mehrzahl von Orten bei dem Schritt (E20) des Erfassens betrachtet wird, wobei das Verfahren, wenn mehrere Orte als Orte für die Rückstreuung bestimmt werden, einen Schritt (E50) des Auswählens, unter den Orten für die Rückstreuung, eines Orts, "optimaler Ort" (E_OPT) genannt, umfasst, für den die zugeordnete Messung der elektromagnetischen Leistung unter den Messungen der elektromagnetischen Leistung, die den Orten für die Rückstreuung zugeordnet sind, maximal ist.

6. Verfahren nach einem der Ansprüche 1 bis 5, wobei eine Mehrzahl von Übertragungsvorrichtungen (D_TX) betrachtet wird, wobei die Schritte (E10, E20, E30, E40, E50) des Verfahrens von jeder der Vorrichtungen durchgeführt werden, wenn die Übertragungsvorrichtungen (D_TX) gleichzeitig in dem Nicht-Rückstreu-Zustand sind.

7. Verfahren zur Rückstreuung, durch mindestens eine Übertragungsvorrichtung (D_TX) und zu mindestens einer Empfangsvorrichtung (D_RX), eines Umgebungsfunksignals, das in einem Frequenzband, "Sendeband" genannt", gesendet wird, wobei die Übertragungsvorrichtung (D_TX) Folgendem zugeordnet ist:

    - einer Zone (Z_T), die von dem Sendeband abhängig ist,
    - mindestens zwei Betriebszuständen, einem sogenannten "Rückstreu"-Zustand und einem gegenteiligen sogenannten "Nicht-Rückstreu"-Zustand,
    - einem Frequenzband, "Arbeitsband" genannt, das in dem Sendeband enthalten ist,

wobei das Verfahren umfasst:

    - einen Schritt (F10) des Bestimmens mindestens eines Orts für die Rückstreuung gemäß einem Verfahren nach einem der Ansprüche 1 bis 6,
    - wenn mindestens ein Ort bestimmt worden ist und die Übertragungsvorrichtung (D_TX) in dem Nicht-Rückstreu-Zustand ist, einen Schritt (F20) des Verlagerns der Übertragungsvorrichtung (D_TX) in der Zone (Z_T), so dass sie eine feste Position (POS_F) erreicht, die von dem mindestens einen bestimmten Ort abhängig ist,
    - einen Schritt (F30) des Rückstreuens des Umgebungssignals durch die Übertragungsvorrichtung (D_TX).

8. Verfahren nach Anspruch 7, wobei, wenn ein optimaler Ort (E_OPT) gemäß Anspruch 5 bestimmt wird, die feste Position (POS_F) mit der Position der Übertragungsvorrichtung (D_TX) identisch ist, wenn sie die Messung der elektromagnetischen Leistung ausgeführt hat, die dem optimalen Ort (E_OPT) zugeordnet ist.

9. Verfahren nach einem der Ansprüche 7 bis 8, wobei die Schritte des Bestimmens (F10) mindestens eines Orts, des Verlagerns (F20) der Übertragungsvorrichtung (D_TX), so dass sie eine feste Position (POS_F) erreicht, und des Rückstreuens (F_30) wiederholt iteriert werden.

10. Computerprogramm, das Anweisungen umfasst, die bei der Ausführung des Programms durch einen Computer ein Verfahren zur Bestimmung mindestens eines Orts nach einem der Ansprüche 1 bis 6 oder ein Verfahren zur Rückstreuung nach einem der Ansprüche 7 bis 9 durchführen.

11. Computerlesbares Speichermedium, auf dem ein Computerprogramm nach Anspruch 10 gespeichert ist.

12. Übertragungsvorrichtung (D_TX) zur Rückstreuung zu mindestens einer Empfangsvorrichtung (D_RX) eines Umgebungsfunksignals, das in einem Frequenzband, "Sendeband" genannt, gesendet wird, wobei die Übertragungsvorrichtung Folgendem zugeordnet ist:

- einer Zone (Z_T), die von dem Frequenzband abhängig ist,
- Betriebszuständen, darunter mindestens einem sogenannten "Rückstreu"-Zustand sowie einem gegenteiligen sogenannten "Nicht-Rückstreu"-Zustand,
- einem Frequenzband, "Arbeitsband" genannt, das in dem Sendeband enthalten ist,

wobei die Übertragungsvorrichtung (D_TX) umfasst:

- Mittel zum Verlagern in der Zone,
- Erfassungsmittel (114), die dazu ausgestaltet sind, in dem Arbeitsband und an mindestens einem Ort (E_i) der Zone (Z_T), wenn die Übertragungsvorrichtung (D_TX) in dem Nicht-Rückstreu-Zustand ist, mindestens eine Messung der elektromagnetischen Leistung (P_i) zu erfassen, die von der Übertragungsvorrichtung (D_TX) empfangen wird,
- ein Vergleichsmodul, das dazu ausgestaltet ist, die mindestens eine Messung der elektromagnetischen Leistung mit einem bestimmten Schwellenwert (S_D) zu vergleichen,
- ein Bestimmungsmodul, das dazu ausgestaltet ist, wenn die mindestens eine Messung der elektromagnetischen Leistung größer als der bestimmte Schwellenwert (S_D) ist, zu bestimmen, dass der Ort (E_i), welcher der mindestens einen Messung der elektromagnetischen Leistung zugeordnet ist, ein Ort für die Rückstreuung ist.

13. Übertragungsvorrichtung (D_TX) nach Anspruch 12, wobei die Übertragungsvorrichtung (D_TX) ein Steuerungsmodul umfasst, das dazu ausgestaltet ist, wenn mindestens ein Ort für die Rückstreuung bestimmt worden ist, eine Verlagerung der Übertragungsvorrichtung (D_TX) in der Zone (Z_T) zu steuern, so dass sie eine feste Position (POS_F) erreicht, die von dem mindestens einen bestimmten Ort abhängig ist.

14. Kommunikationssystem, das mindestens eine Übertragungsvorrichtung (D_TX) nach einem der Ansprüche 12 bis 13 und mindestens eine Empfangsvorrichtung (D_RX) umfasst.

## Claims

1. Method for determining at least one location for backscatter, by at least one transmitting device (D_TX) and to at least one receiving device (D_RX), of an ambient radio signal emitted in a frequency band, called the "emission band", said transmitting device (D_TX) being associated with:

- a zone (Z_T) depending on said emission band,
- operating states, including at least one state called the "backscattering" state and a contrary state called the "non-backscattering" state,
- a frequency band, called the "working band", included in said emission band,

said method being implemented by the transmitting device (D_TX) when it is in the non-backscattering state and comprising:

- a step (E10) of moving the transmitting device (D_TX) through at least one portion of said zone (Z_T),
- during the movement of the transmitting device (D_TX), a step (E20) of acquiring, in the working band and in at least one location (E_i) of said portion, at least one measurement (P_i) of the electromagnetic power received by said transmitting device (D_TX),
- a step (E30) of comparing said at least one measurement (P_i) of electromagnetic power with a determined threshold (S_D), the location (E_i) associated with said measurement of electromagnetic power being determined (E40) to be a location for backscatter if said measurement (P_i) of electromagnetic power is greater than said determined threshold (S_D).

2. Method according to Claim 1, wherein the transmitting device (D_TX) is moved throughout the zone (Z_T).

3. Method according to either one of Claims 1 and 2, wherein the transmitting device (D_TX) is moved autonomously or in an assisted manner.

4. Method according to any one of Claims 1 to 3, wherein a plurality of locations is considered in the acquiring step (E20), each measurement of electromagnetic power being acquired with a determined time interval or a determined distance interval between each location of at least one location in said portion of the zone (Z_T).

5. Method according to any one of Claims 1 to 4, wherein a plurality of locations is considered in the acquiring step (E20), said method comprising, when a plurality of locations are determined to be locations for backscatter, a step (E50) of selecting, from said locations for backscatter, a location, called the "optimal location" (E_OPT), the associated measurement of electromagnetic power of which is maximum among the measurements of electromagnetic power associated with said locations for backscatter.

6. Method according to any one of Claims 1 to 5, wherein a plurality of transmitting devices (D_TX) is considered, the steps (E10, E20, E30, E40, E50) of said method being implemented by each of said devices when said transmitting devices are simultaneously in the non-backscattering state.

7. Method of backscatter, by at least one transmitting device (D_TX) and to at least one receiving device (D_RX), of an ambient radio signal emitted in a frequency band, called the "emission band", said transmitting device (D_TX) being associated with:

- a zone (Z_T) depending on said emission band,
- at least two operating states, including a state called the "backscattering" state and a contrary state called the "non-backscattering" state,
- a frequency band, called the "working band", included in said emission band,

said method comprising:

- a step (F10) of determination of at least one location for backscatter using a method according to any one of Claims 1 to 6,
- when at least one location has been determined and the transmitting device (D_TX) is in the non-backscattering state, a step (F20) of movement of the transmitting device (D_TX) through the zone (Z_T), so as to reach a fixed position (POS_F) dependent on said at least one determined location,
- a step (F30) of backscatter, by the transmitting device (D_TX), of the ambient signal.

8. Method according to Claim 7, wherein, when an optimal location (E_OPT) is determined according to Claim 5, said fixed position (POS_F) is identical to the position of the transmitting device (D_TX) when it made the measurement of electromagnetic power associated with said optimal location (E_OPT).

9. Method according to either one of Claims 7 and 8, wherein the steps of determination (F10) of at least one location, of movement (F20) of the transmitting device so as to reach a fixed position (POS_F), and of backscatter (F30) are iterated recursively.

10. Computer program comprising instructions for implementing a method for determining at least one location according to any one of Claims 1 to 6 or a method of backscatter according to any one of Claims 7 to 9 when said program is executed by a computer.

11. Computer-readable recording medium on which a computer program according to Claim 10 is recorded.

12. Transmitting device (D_TX) for backscatter to at least one receiving device (D_RX) of an ambient radio signal emitted in a frequency band, called the "emission band", said transmitting device being associated with:

- a zone (Z_T) depending on said frequency band,
- operating states, including at least one state called the "backscattering" state and a contrary state called the "non-backscattering" state,
- a frequency band, called the "working band", included in said emission band,

said transmitting device (D_TX) comprising:

- means for moving through said zone,
- acquiring means (114), configured to acquire, in the working band and in at least one location (E_i) in said zone (Z_T), when the transmitting device (D_TX) is in the non-backscattering state, at least one measurement (P_i) of the electromagnetic power received by said transmitting device (D_TX),
- a comparing module, configured to compare said at least one measurement of electromagnetic power with a determined threshold (S_D),
- a determining module, configured to determine, when said at least one measurement of electromagnetic power is greater than said determined threshold (S_D), that the location (E_i) associated with said at least one measurement of electromagnetic power is a location for backscatter.

13. Transmitting device (D_TX) according to Claim 12, said transmitting device (D_TX) comprising a control module, configured to control, when at least one location for backscatter has been determined, a movement of the transmitting device (D_TX) through the zone (Z_T), so as to reach a fixed position (POS_F) dependent on said at least one determined location.

14. Communication system comprising at least one transmitting device (D_TX) according to either one of Claims 12 and 13 and at least one receiving device (R_TX).

Fig.1

Z_6  Z_5  Z_3  Z_1  Z_2  Z_4  Z_T

Fig.2

20
F_1  F_2
F_3
D_TX  D_RX
10

Fig.3

115
112
111
113
I_1
114
D_TX

MV D_TX | ZONE Z_T — E10

ACQ P_1, P_2,... — E20

COMP P_1, P_2,.../ S_D — E30

i = 1, 2, ... | P_i ≥ S_D ⇒E_i OK — E40

Fig.4

MV D_TX | ZONE Z_T — E10

ACQ P_1, P_2,... — E20

COMP P_1, P_2,.../ S_D — E30

i = 1, 2, ... | P_i ≥ S_D ⇒E_i OK — E40

SELECT E_OPT — E50

Fig.5

i = 1, 2, ... | DET E_i — F10

MV D_TX→POS_F — F20

RETRO D_TX →D_RX — F30

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. VAN HUYNH et al.** Ambient Backscatter Communications: A Contemporary Survey. *IEEE Communications Surveys & Tutorials*, 2018, vol. 20 (4), 2889-2922

- **K. RACHEDI et al.** Demo Abstract: Real-Time Ambient Backscatter Demonstration. *IEEE Conference on Computer Communications Workshops (INFOCOM WKSHPS), Paris, France*, 29 April 2019